# EUROPÄISCHE PATENTANMELDUNG

(11) **EP 1 394 924 A1**
(43) Veröffentlichungstag der Anmeldung: **03.03.2004**
(21) Anmeldenummer: 03005901.8
(22) Anmeldetag: 17.03.2003
(51) Int. Cl.: H02K 7/12, H02K 7/116, B60S 1/26

(54) **Einrichtung mit Selbsthemmung zum Antrieb von Wischkomponenten**

(30) Priorität: 30.08.2002 DE 10240055
(71) Anmelder: ROBERT BOSCH GMBH, 70442 Stuttgart (DE)
(72) Erfinder: Neubauer, Achim, 76547 Sinzheim-Vormberg (DE); Bolz, Martin-Peter, 77815 Buehl (DE); Moench, Jochen, 76547 Sinzheim (DE); Krueger, Hartmut, 77830 Buehlertal (DE)

(57) **Zusammenfassung**

Die Erfindung bezieht sich auf eine Antriebseinheit für Wischkomponenten an Fahrzeugen. Die Antriebseinheit umfaßt einen elektrischen Antrieb (1), welcher in einem Gehäuse (3; 32, 33) aufgenommen ist. Der elektrische Antrieb (1) umfaßt eine Ankerwelle (26), an welcher eine erste Verzahnung (4) ausgebildet ist. Die Ankerwelle (26) ist im Gehäuse (3; 32, 33) axial verschieblich aufgenommen und über ein Federelement (28) beaufschlagt. Am Gehäuse (3; 32, 33) ist ein Kronrad oder ein Kronradsegment (5) verschwenkbar aufgenommen. Das Kronrad oder Kronradsegment (5) kämmt mit der ersten Verzahnung (4) an der Ankerwelle (26) des elektrischen Antriebes (1).

## Beschreibung

### Technisches Gebiet

Bei heute eingesetzten Wischerantrieben für Front- bzw. Heckscheiben von Fahrzeugen kommen Einarmwischer und/oder Gegenlaufwischanlagen zum Einsatz. Diese sind mit elektrischen Wischerantriebsmotoren versehen. Bei Gegenlaufwischanlagen ist bei heutigen Ausführungsformen nach wie vor ein Gelenkgetriebe erforderlich. Aus Kosten- und Platzgründen wird jedoch verstärkt dazu übergangen, die Welle eines Scheibenwischers direkt von einem Antrieb aus anzutreiben, wobei der Antrieb nur ein Zahnradgetriebe und einen Elektromotor umfaßt.

### Stand der Technik

Heute eingesetzte Wischerantriebe umfassen einen elektrischen Antrieb, der über ein Zahnradgetriebe die Welle eines Wischers direkt antreibt. Dazu werden modifizierte Schneckengetriebe eingesetzt, die an die gestiegenen Drehmomentanforderungen angepaßt sind. Ein Schneckenradgetriebe bietet eine Selbsthemmung, die diesem Getriebeprinzip aufgrund seiner Achsgeometrie innewohnt. Ferner bietet der Einsatz eines Schneckengetriebes die Möglichkeit, eine ungewollte Bewegung eines Wischarmes durch Wind- und Trägheitskräfte zu verhindern. Nachteilig ist jedoch der Umstand, daß Schneckenradgetriebe einen erheblichen Bauraumbedarf haben und hinsichtlich ihrer Herstellkosten relativ teuer sind. Ein weiteres Schneckenradgetrieben innewohnendes Charakteristikum ist deren relative geringer Wirkungsgrad, der zur Herbeiführung einer Selbsthemmung unterhalb von 50 % liegen sollte.

US 6,025,663 bezieht sich auf einen elektrischen Antrieb, der eine Bremseinrichtung aufweist. Der elektrische Antrieb treibt ein Getriebe an, welches schrägverzahnte Zahnräder umfaßt. Der elektrische Antrieb dient zur Betätigung von Türen bzw. Torelementen. Der elektrische Antrieb umfaßt einen auf eine Ankerwelle angeordneten Anker, der von einem Gehäuse fest angeordneten Stator umgeben ist. Bei Bestromung des elektrischen Antriebes rotiert der Läufer und treibt ein auf der Ankerwelle aufgenommenes schrägverzahntes Ritzel an, welches mit einem schrägverzahnten Zahnrad kämmt. Ist der elektrische Antrieb hingegen nicht bestromt, erfolgt eine Längsverschiebung der Ankerwelle aufgrund der durch die Schrägverzahnung resultierenden, auf die Ankerwelle wirkenden Axialkraft. An dem dem schrägverzahnten Ende gegenüberliegenden Ende der Ankerwelle weist dieses einen konisch ausgebildeten Bremsring auf, der drehfest auf der Ankerwelle aufgenommen ist. Bei Axialverschiebung der Ankerwelle drückt die konisch ausgebildete Umfangsfläche der Bremsscheiben gegen einen konischen Bereich des Gehäuses des elektrischen Antriebes und bremst die rotierende Ankerwelle ab. Diese ist dadurch bei nicht bestromten elektrischen Antrieb gegen Rotation gesichert.

Aus US 4,535,261 ist ein Kleinmotor mit Reduziergetriebe bekannt. Auf einer Welle sind an den einander gegenüberliegenden Wellenenden einerseits ein Zahnrad und andererseits eine den Magnetkern umgebende Scheibe aufgenommen. Der Magnetkern nimmt seinerseits eine Magnetspule auf, die bestrombar ist. Ist die Magnetspule bestromt, erfolgt eine Abwärtsbewegung der Welle mit daran aufgenommenem Zahnrad, welches mit einem weiteren Zahnrad kämmt, so daß die Drehbewegung der Welle um ein Reduziergetriebe übertragen wird. Ist die Bestromung der vom Magnetkern aufgenommenen Magnetspule unterbrochen, wird die am gegenüberliegenden Ende der Welle aufgenommene Scheibe zum Magnetkern abgestoßen, so daß das Zahnrad an dem der Scheibe gegenüberliegenden Ende der rotierenden Welle nach oben bewegt wird und außer Eingriff dem Zahnrad des Reduziergetriebes gerät. Dadurch ist der Kraftfluss in das Reduziergetriebe unterbrochen.

DE 101 06 724 bezieht sich auf ein Verfahren und eine Vorrichtung zur Entkopplung eines Aktuators von einem Getriebe. Der Stellantrieb umfaßt einen elektrischen Aktuator, der auf Kraftübertragungselemente einwirkt. Mit diesen wird die Stellbewegung an die zu verstellende Antriebs- oder Verstellkomponente übertragen. Es ist ein Ausrückelement vorgesehen, welches im stromlosen Zustand des elektrischen Aktuators die Kraftübertragung durch die Kraftübertragungselemente unterbricht.

### Darstellung der Erfindung

Gemäß der vorgeschlagenen Lösung wird unter Verzicht auf ein Gelenkgetriebe ein Direktantrieb für einen Wischantrieb dadurch realisiert, daß ein elektrischer Antrieb mit einem Kronradgetriebe zusammenarbeitet. Im Gegensatz zu Schneckengetrieben kreuzen sich bei Kronradgetrieben Antriebs- und Abtriebswelle, bzw. liegen bei Schrägverzahnung nahe beieinander. Daher ist mit einem Kronradgetriebe ein wesentlich kompakterer Aufbau eines Wischer-Direktantriebes möglich.

Aufgrund der Anordnung eines Kronrades oder eines Kronradsegmentes direkt am elektrischen Antrieb kann eine weitere Lagerstelle, wie sie zur Versteifung der Schneckenradwelle eines Schneckengetriebes erforderlich ist, eingespart werden. Bei Schneckengetriebe ist die Abstützung der Schnecke an dem dem Antriebsmotor entfernter liegenden Ende zur Vermeidung einer unzulässigen Biegung der Schnecke unter Last erforderlich.

Gemäß der vorgeschlagenen Lösung kann die Drehachse des Kronrades bzw. Kronradsegmentes unmittelbar am Gehäuse des elektrischen Antriebes gelagert werden. Dadurch ergibt sich eine günstige Baulänge eines Direktantriebes für einen Wischerantrieb. Ferner wird die Breite des Einbauraumes für den Wischerantrieb reduziert, so daß dieser auch bei beengten Platzverhältnissen eingebaut werden kann. Mit der vorgeschlagenen Variante eines Direktantriebes für Wischer können Schwenkbereiche von mehr als 100° abgedeckt werden. Das Kronrad oder das Kronradsegment wird bevorzugt oval ausgebildet, um eine harmonische Wischerbewegung zu ermöglichen und die in den Umkehrlagen jeweils benötigten hohen Drehmomente zu unterstützen. In vorteilhafter Weise kann unter Verwendung eines Kronradgetriebes eine ungleichmäßige Untersetzung sehr einfach realisiert werden, da nur der Radius' des Kronrades bzw. des Kronradsegementes variiert werden muß, damit das innen verzahnte Kronrad bzw. Kronradsegment und ein außen verzahntes Ritzel an der Welle des elektrischen Antriebes ineinander greifen.

Die Länge, in der die Außenverzahnung des Ritzels an der Ankerwelle des elektrischen Antriebes ausgebildet wird, ist fertigungstechnisch einfach veränderbar. Bei Einsatz eines Kronrades bzw. ein Kronradsegmentes mit verkleinertem oder vergrößertem Radius ist ein Austausch des Ritzels am elektrischen Antrieb nicht erforderlich.

Bei Einsatz von Kronrädern bzw. Kronradsegmenten kann durch Variation des Verzahnungsdurchmessers und entsprechend angepasster Verzahnung die Untersetzung verändert werden. Je kleiner der Verzahnungsradius ist, desto geringer ist die sich einstellende Untersetzung. Eine Variation des Radius um etwa 10% eines Kronradsegmentes führt dazu, daß sich in den Umkehrlagen eine größere Untersetzung einstellt. Bei gleicher Antriebszahl stellt sich eine geringere Verdrehgeschwindigkeit des Kronradsegmentes ein. Der Radius des Kronrades bzw. des Kronradsegmentes kann so ausgelegt werden, daß dieser bezogen auf den Drehpunkt des Kronradsegmentes an den Seitenflächen des Kronradsegmentes etwa 10 % größer ist im Vergleich zum mittleren Radius des Kronradsegmentes. Daher läßt sich über ein Kronradgetriebe ein Unrundgetriebe darstellen, welches für einen Wischerantrieb besonders geeignet ist.

Mit dem erfindungsgemäß vorgeschlagenen Direktantrieb kann ein Baukastensystem für Direktantrieb stark vereinfacht, d.h. in seiner Baukomponentenanzahl reduziert werden. Die Drehachse des Kronrades bzw. des Kronradsegmentes muß nicht zwangsläufig rechtwinklig zur Symmetrieachse des elektrischen Antriebes verlaufen. Bei bestimmten Einsatzzwecken können durchaus auch andere Winkel als 90° zwischen der Ankerwelle des elektrischen Antriebes und der Drehachse des Kronrades bzw. des Kronradsegmentes gewählt werden. Dies führt nur zu einem Austausch des betreffenden Kronrades, nicht aber der Antriebseinheit, die unverändert beibehalten werden kann. Als elektrischer Antrieb des vorgeschlagenen Direktantriebes für Wischer wird ein Gleichstrommotor eingesetzt, der ohne Gestänge reversierend betrieben wird. Der eingesetzte Gleichstrommotor benötigt keine Sensoren für die Kommutierung, sondern es ist lediglich ein Winkelsensor für den Abtrieb erforderlich. Dafür können Hall-Sensoren oder kapazitive Sensoren eingesetzt werden.

Als elektrischer Antrieb wird ein Gleichstrommotor eingesetzt, dessen Ankerwelle samt darauf befindlicher Wicklungen und dessen auf der Ankerwelle aufgenommener Kommutator bei Stromabschaltung axial verschoben werden können. Die Verschiebung der Ankerwelle, die daran aufgenommenen Wicklungen und Kommutator erfolgt im unbestromten Zustand durch ein Stellelement, welches als Feder ausgebildet ist. Durch die Verschiebung der Ankerwelle wird eine kraft- oder formschlüssige Verbindung der Ankerwelle mit dem stehenden Gehäuse des elektrischen Antriebes erzielt. Bei Bestromung des elektrischen Antriebes kann die Ankerwelle durch die Magnetkräfte wieder in ihre Arbeitsposition bewegt werden. Aufgrund der Kronradverzahnung, sei es über ein Kronrad oder sei es über ein Kronradsegment des mit dem elektrischen Antrieb zusammenarbeitenden Getriebes, kann eine axiale Verschiebung des an der Ankerwelle ausgebildeten Ritzels ohne Zahneingriffsstörungen durch zusätzliche Krafteinwirkung erfolgen. Kopplungselemente oder Synchronisationsvorrichtungen können eingespart werden. Prinzipbedingt kann der auf der Ankerwelle des elektrischen Antriebes ausgebildete Ritzelabschnitt ohne Trennung des Zahneingriffes zum Kronrad bzw. zum Kronradsegment axial verschoben werden, wenn das Ritzel in einer ausreichenden Länge an der Ankerwelle ausgebildet ist. Wird eine Geradverzahnung gewählt, kann eine Axialverschiebung der Ankerwelle ohne Verdrehung von Ritzel und/oder Kronrad bzw. Kronradsegment erfolgen. Dies begünstigt ein Form- oder kraftschlüssig bewirktes Bremsen bzw. Hemmen der Ankerwelle des elektrischen Antriebes.

### Zeichnung

Anhand der Zeichnung wird die Erfindung nachstehend näher erläutert.

Es zeigt:
- Figur 1: einen elektrischen Antrieb mit daran drehbar aufgenommenem Kronrad bzw. Kronradsegment in Rückansicht und in Mittellage befindlich,
- Figur 2: den elektrischen Antrieb gemäß Fig. 1 mit Draufsicht auf die Verzahnung des Kronrades bzw. des Kronradsegmentes,
- Figur 3: einen elektrischen Antrieb mit um seine Drehachse verschwenktem Kronradsegment,
- Figur 4: den elektrischen Antrieb gemäß Fig. 3, um 180° um seine Symmetrieachse verdreht,
- Figur 5: die Draufsicht auf ein verdrehbarem elektrischen Antrieb aufgenommenes Kronradsegment,
- Figur 6: eine aktivierte Selbsthemmvorrichtung eines nicht bestromten elektrischen Antriebes mit an der Ankerwelle ausgeführtem Ritzel und
- Figur 7: eine nicht aktivierte Selbsthemmvorrichtung des elektrischen Antriebs gemäß Fig. 6.

### Ausführungsvarianten

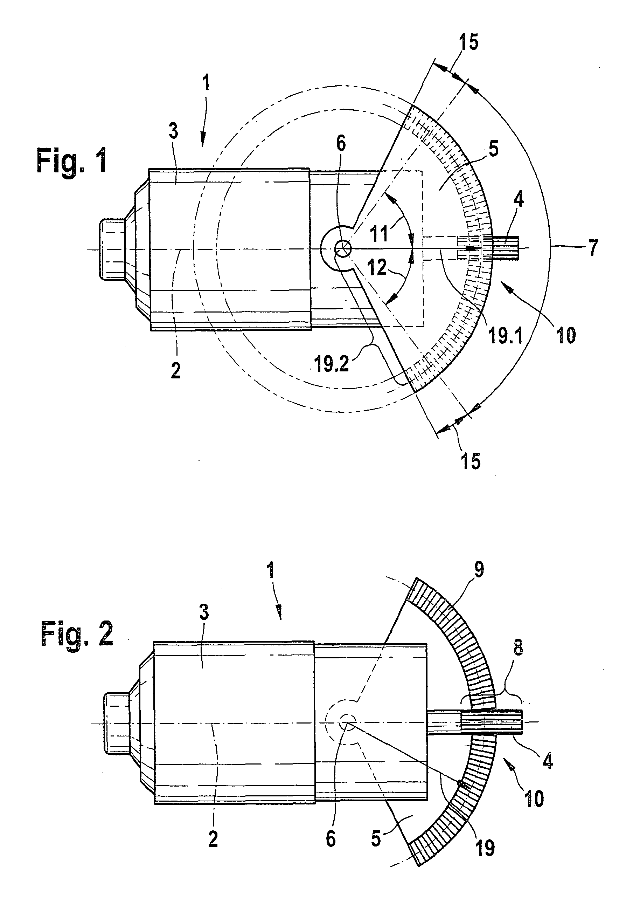

Fig. 1 ist ein elektrischer Antrieb entnehmbar, an dem ein Kronrad bzw. ein Kronradsegment verdrehbar aufgenommen ist, welches sich in dieser Darstellung in seiner Mittellage befindet. Aus der Seitenansicht gemäß Fig. 1 geht eine Antriebseinheit hervor, deren elektrischer Antrieb 1 in einem Gehäuse 3 aufgenommen ist. Zur Symmetrieachse 2 des elektrischen Antriebes 1 und des Gehäuses 3 fluchtend ist eine eine erste Verzahnung 4 aufweisende Ankerwelle aufgenommen. Die erste Verzahnung 4 wird bevorzugt als Ritzel ausgeführt und erstreckt sich am Endbereich der Ankerwelle des elektrischen Antriebes 1. An einem Anlenkpunkt 6 an der Außenseite des Gehäuses 3 des elektrischen Antriebes ist ein Kronrad oder ein Kronradsegment 5 verschwenkbar aufgenommen. Der Anlenkpunkt 6 des Kronrades oder des Kronradsegmentes 5 stellt die Abtriebswelle der in Fig. 1 dargestellten Antriebseinheit dar. Der Winkel, über welchen sich eine an der Innenseite des Kronrades bzw. des Kronradsegmentes 5 ausgebildete Verzahnung, die mit der ersten Verzahnung 4 der Ankerwelle zusammenarbeitet, erstreckt, ist mit Bezugszeichen 7 gekennzeichnet. Das Kronrad bzw. das Kronradsegment 5 ist in Fig. 1 in eine Mittellage 10 gestellt wiedergegeben. Oberhalb der Mittellage 10 - bezogen auf die Symmetrieachse 2 des elektrischen Antriebes 1- ist ein erster Schwenkbereich 11 eingezeichnet, um welchen das Kronrad oder das Kronradsegment 5 um seinen Anlenkpunkt 6 am Gehäuse 3 des elektrischen Antriebes 1 verschwenkt werden kann. Analog dazu erstreckt sich unterhalb der Symmetrieachse 2 des elektrischen Antriebes 1 ein zweiter Schwenkbereich 12, um den das Kronrad oder das Kronradsegment 5 nach unten bewegt werden kann. In den Endbereichen 15 des Kronrades oder des Kronradsegmentes 5 sind mit Bezugszeichen 15 Auslaufbereiche der Verzahnung an der Innenseite des Kronrades oder des Kronradsegmentes 5 ausgebildet. Die am Kronrad bzw. dem Kronradsegment 5 vorgesehenen Auslaufbereiche 15 können z.B. im Rahmen einer elektronischen Wischerregelung genutzt werden, um eine Parklage zu realisieren, die nur angefahren wird, wenn die Wischanlage abgeschaltet wird. Treten beim Wischen einer Scheibe wechselnde Anforderungen auf, so z.B. bei einer trockenen Scheibenoberfläche, einer benetzten Scheibenoberfläche oder unterschiedlicher Wischgeschwindigkeiten, kann im Rahmen einer elektronischen Regelung der Wischeranlage über die Auslaufbereiche 15 an den Kronradsegmenten 5 abhängig von den Scheibenzuständen der volle Wischbereich ausgenutzt werden. So kann beispielsweise bei hohen Wischwiderständen, z.B. trockener Scheibe das Kronrad bzw. das Kronradsegment 5 so weit gedreht werden, daß auch die Auslaufbereiche 15 in den Eingriffsbereich der ersten Verzahnung 4 gestellt werden. Damit läßt sich auch bei großen Widerständen der volle Wischbereich überstreichen. Ist hingegen bei großen Fliehkräften bei einer hohen Wischergeschwindigkeitsstufe und benetzter Scheibe ein kleinerer Verdrehwinkel erforderlich, kann über die elektronische Wischerregelung eine Bewegung des Kronradsegmentes 5 in seine Auslaufbereiche 15 durch eine entsprechende Ansteuerung des elektrischen Antriebes 1 unterbunden werden.

Fig. 2 ist die Antriebseinheit gemäß Fig. 1 mit der Draufsicht auf die Innenverzahnung des Kronrades oder des Kronradsegmentes zu entnehmen.

Auf der der ersten Verzahnung 4 auf der Ankerwelle des elektrischen Antriebes 1 zuweisenden Seite des Kronrades oder des Kronradsegmentes 5 ist dieses mit einer Verzahnung 9 versehen. Der Radius der Mittellinie der Verzahnung 9 in Bezug auf den Anlenkpunkt 6 des Kronrades oder des Kronradsegmentes 5 ist mit Bezugszeichen 19 gekennzeichnet. Durch die Wahl des Radius' 19 des Kronrades oder des Kronradessegmentes 5 kann der Schwenkweg der mit dem Anlenkpunkt 6 des Kronrades bzw. Kronradsegmentes 5 zusammenfallenden Abtriebsachse die Antriebseinheit gemäß der Darstellung in Fig. 2 bestimmt bzw. variiert werden. Die erste Verzahnung 4 an der Welle des elektrischen Antriebes 1 wird bevorzugt als Ritzel ausgebildet, welches sich innerhalb eines sich in axiale Richtung an der Ankerwelle des elektrischen Antriebes 1 erstreckenden Verzahnungsbereiches 8 ausgebildet wird. Auch in der Darstellung gemäß Fig. 2 befindet sich das Kronrad oder das Kronradsegment 5 in seiner mit Bezugszeichen 10 identifizierten Mittellage.

In den Darstellungen gemäß den Fig. 1 und 2 kreuzt sich die Achse des Anlenkpunktes 6 des Kronrades oder des Kronradsegmentes 5 mit der Ankerwelle des elektrischen Antriebes 1, an dem die erste Verzahnung 4 ausgebildet ist. Mit der hier dargestellten Ausführung einer Antriebseinheit können Schwenkwege des Kronrades oder des Kronradsegmentes 5 von etwa 110° erreicht werden. Je nach verwendeten Werkstoffen, Schmierstoffen und den Umgebungsbedingungen, denen die Antriebseinheit ausgesetzt ist, ist lediglich ein den elektrischen Antrieb 1 umschließendes Gehäuse 3 erforderlich. In diesem Falle ist eine Kapselung des Getriebes aus Kronrad oder Kronradsegment 5 und erster Verzahnung 4 an der Ankerwelle des elektrischen Antriebes 1 nicht erforderlich.

Alternativ können je nach Einsatzbedingungen der Antriebseinheit auch die Getriebekomponenten 5 bzw. 4 zusätzlich durch ein in den Fig. 1 und 2 jedoch nicht dargestelltes Gehäuse geschützt werden.

Das in den Fig. 1 und 2 dargestellte Kronrad oder Kronradsegment 5 ist von ovaler Kontur, um eine harmonische Wischerbewegung zu unterstützen und das Aufbringen in den Umkehrlagen eines Wischers erforderlichen hohen Drehmomente zu begünstigen. So weist das Kronrad oder das Kronradsegment 5 in seiner in Fig. 1 mit der Symmetrieachse 2 zusammenfallenden Mitte einen ersten Kronradradius 19.1 auf, der geringer ist als der Radius 19.2 des Kronrades oder des Kronradsegmentes 5 an seinen seitlichen Enden, jeweils bezogen auf die Mitte der Verzahnung 9 am Kronrad oder am Kronradsegment 5.

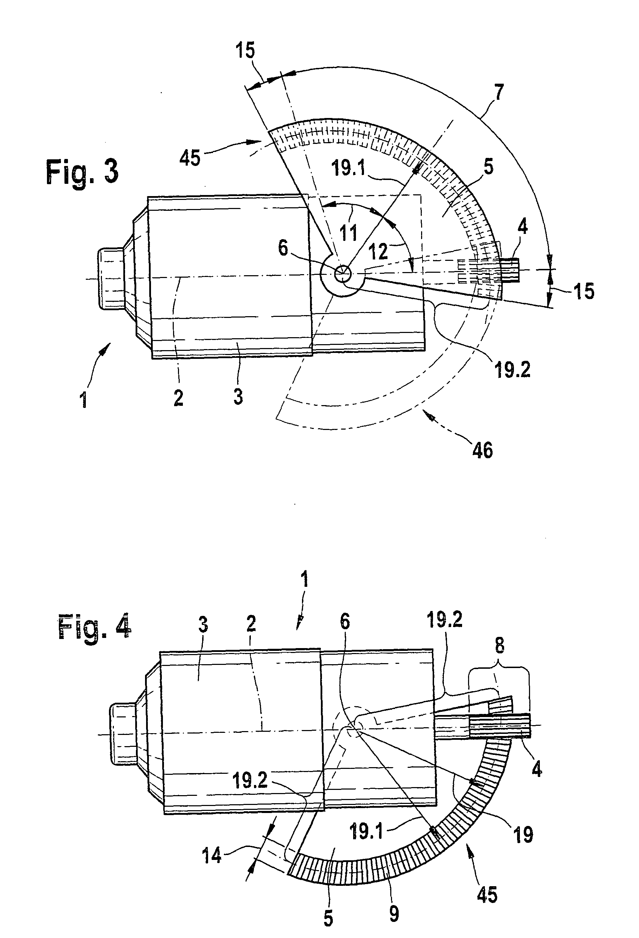

Fig. 3 zeigt einen elektrischen Antrieb mit um seinen Anlenkpunkt verschwenktem Kronrad oder Kronradsegment.

Aus der Darstellung gemäß Fig. 3 geht hervor, daß das Kronrad oder Kronradsegment 5 in seine erste Endlage 45 gestellt ist. In dieser Position sind die erste Verzahnung 4 der Ankerwelle des elektrischen Antriebes 1 der Antriebseinheit und die an der Innenseite des Kronrades oder des Kronradsegmentes 5 ausgebildete Verzahnung 9 gerade noch im Eingriff. Bezogen auf seine in Fig. 1 dargestellte Mittellage 10 ist das Kronrad oder das Kronradsegment 5 um seine gesamte Fläche 7 in die erste Endlage 45 gestellt. Mit Bezugszeichen 46 ist in gestrichelter Wiedergabe die zweite Endlage 46 des Kronrades oder des Kronradsegmentes 5 dargestellt, in welche dieses beim Reversieren des elektrischen Antriebes 1 der Antriebseinheit gestellt wird. Der effektive Schwenkbereich, um welchen das Kronrad oder das Kronradsegment 5 während der Drehbewegung des elektrischen Antriebes 1 unter Aufrechterhaltung des Zahneingriffs zwischen der ersten Verzahnung 4 und der Verzahnung 9 des Kronrades oder des Kronradsegmentes 5 verschwenkbar ist, setzt sich aus dem ersten Schwenkbereich 11 und dem zweiten Schwenkbereich 12 zusammen.

Durch die Wahl unsymmetrischer Kronradsegmente können Drehwinkelbereiche eingestellt werden, die bei Heckwischem etwa 180 ° betragen und bei Frontscheibenwischern, insbesondere auf der Beifahrerseite maximal 60 ° Wischerverdrehungen zulassen. Die Endabschnitte des Kronrades oder des Kronradsegmentes 5 sind jeweils mit Bezugszeichen 15 identifiziert. Die Auslaufbereiche 15 am Kronradsegment 5 können bei einer elektronischen Regelung der Wischanlage dazu genutzt werden, bei trockenen Scheiben, die einen hohen Wischwiderstand darstellen, sicherzustellen, daß die Wischkomponente den gesamten Wischbereich überstreicht. Aufgrund der sich einstellenden Elastizitäten im Wischhebel bzw. Wischblatt sind bei trockenen Scheibenoberflächen große Reibkräfte zu überwinden, die ein nicht vollständiges Erreichen der Endlagen eines Wischarmes zur Folge haben können. Wird bei solchen Umgebungsbedingungen der elektrische Antrieb 1, welcher das Kronradsegment 5 antreibt, bis in seine Auslaufbereiche 15 verstellt, kann die sich bei trockener Scheibenoberfläche einstellende Elastizität von Wischarm bzw. Wischhebel und Wischblatt kompensiert werden und dennoch ein vollständiges Überstreichen des Wischbereiches gewährleistet werden. Bei hoher Wischgeschwindigkeit und benetzter Scheibe kann es erforderlich sein, den elektrischen Antrieb 1 derart anzusteuern, daß der Verdrehwinkel des Kronradsegmentes 5 so bemessen wird, daß die in dessen Endbereichen liegenden Auslaufbereiche 15 nicht angesteuert werden und demzufolge ein kleinerer Verdrehwinkel erreicht wird. Dies wird insbesondere dann angestrebt, wenn die Wischanlage mit einer höheren Geschwindigkeit arbeitet und die Wischhebel bzw. Wischarme und daran aufgenommene Wischblätter hohen Fliehkräften ausgesetzt sind.

Fig. 4 zeigt die Antriebseinheit gemäß Fig. 3, welche um 180° um ihre Symmetrieachse verdreht ist.

Aus der Darstellung gemäß Fig. 4 geht hervor, daß das drehbar am Gehäuse 3 des elektrischen Antriebes 1 aufgenommene Kronrad oder Kronradsegment 5 in seine - aufgrund der Drehung der Antriebseinheit um ihre Symmetrieachse 2 hier unten liegend - dargestellte erste Endlage 45 gestellt ist. Aufgrund der Ausbildung der ersten Verzahnung 4 als Ritzel innerhalb eines Verzahnungsbereiches 8 am Ende der Ankerwelle des elektrischen Antriebes 1 wandert der Zahneingriff zwischen den Zähnen der ersten Verzahnung 4 und der Verzahnung 9 auf der Innenseite des Kronrades bzw. des Kronradsegmentes 5 entsprechend dessen Radienverlauf 19.2, 19.1, 19.2 in axiale Richtung bezogen auf den Verzahnungsbereich 8. Mit Bezugszeichen 14 ist die Verzahnungslänge bezeichnet, in welcher die Verzahnung 9 auf der Innenseite des Kronradsegmentes 5 ausgebildet ist. Dies ist zur Erzielung einer harmonischen Wischerbewegung günstig und erlaubt den Verzicht auf eine eine angepasste Wischerbewegung ermöglichende Mehrgelenk-Umlenkung.

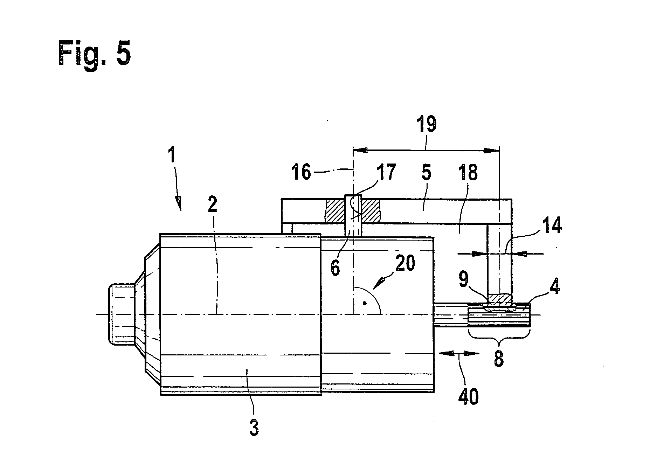

Fig. 5 zeigt die Draufsicht auf ein verdrehbar an der Antriebseinheit aufgenommenes Kronrad oder Kronradsegment.

Aus der Draufsicht gemäß Fig. 5 geht hervor, daß die Symmetrieachse 2 des elektrischen Antriebes 1 der Antriebseinheit mit einer Ankerwelle fluchtet, an welcher innerhalb des Verzahnungsbereiches 8 die erste Verzahnung 4 in Form eines Ritzels ausgebildet ist. Senkrecht zu dieser verläuft die mit dem Anlenkpunkt 6 zusammenfallende Drehachse 16 des Kronrades oder des Kronradsegmentes 5. Die Drehachse 16 durchsetzt eine Bohrung 17 im Kronradsegment 5, dessen Innenraum mit Bezugszeichen 18 bezeichnet ist. In Bezug auf die Mitte der Verzahnung 9 des Kronrades oder des Kronradsegmentes 5 weist das in Fig. 5 dargestellte Kronrad oder Kronradsegment 5 einen Radius 19 auf, der sich jedoch gemäß der Fig. 3 und 4 zwischen einem effektiven Radius 19.1 in der Mitte und 19.2 an den Rändern des Kronrades bzw. Kronradsegmentes 5 ändert. Aufgrund des mittleren Radius' 19 des Kronrades oder des Kronradsegmentes 5 stellt sich die gewünschte ungleichmäßige Untersetzung auf sehr einfachem Wege ein. Eine Änderung der gewünschten ungleichmäßigen Untersetzung kann dadurch vorgenommen werden, daß anstelle eines mit einem bestimmten Radius beschaffenen Kronrades oder Kronradsegmentes 5 ein mit einem anderen Radius ausgebildetes Kronrad oder Kronradsegment 5 am Anlenkpunkt 6, der mit der Drehachse 16 des Kronrades oder des Kronradsegmentes 5 zusammenfällt, montiert wird. Da die erste Verzahnung 4 im Verzahnungsbereich 8 am Ende der Welle des elektrischen Antriebes 1 in einer größeren Axiallänge ausgebildet ist, kämmt auch ein in einem anderen Radius ausgebildetes Kronrad bzw. Kronradsegment 5 mit Innenverzahnung 9 mit der ersten Verzahnung 4. Diese ist in der Verzahnungslänge 14 ausgeführt, die hier geringer ist als die Axiallänge des Verzahnungsbereichs 8.

Wird der Radius 19.2 an den Rändern des Kronrades bzw. des Kronradsegmentes 5 in Bezug auf den Radius 19.1 des Kronradsegmentes 5 um ca. 10 % vergrößert gewählt, stellt sich in den Umkehrlagen eines Wischantriebes eine größere Untersetzung und bei gleicher Antriebsdrehzahl eine geringere Verdrehgeschwindigkeit des Kronrades ein. Dadurch kann mit einem Kronradgetriebe auf einfache Weise ein Unrundgetriebe dargestellt werden, welches für einen Wischerantrieb besonders geeignet ist.

Wenngleich in der Darstellung gemäß Fig. 5 ein rechter Achswinkel 20 zwischen der mit dem Anlenkpunkt 6 zusammenfallenden Drehachse 16 des Kronrades oder des Kronradsegmentes 5 und der Ankerwelle des elektrischen Antriebes 1, die hier mit der Symmetrieachse 2 zusammenfällt, wiedergegeben ist, so können auch andere als rechte Achswinkel 20 zwischen der Drehachse 16 und der Ankerwelle des elektrischen Antriebes 1 gewählt werden. Sind andere als rechte Winkel als Achswinkel 20 zwischen der Drehachse 16 und der Ankerwelle des elektrischen Antriebes 1 aufgrund beengter Einbauverhältnisse aufgrund äußerer Gegebenheiten erforderlich, so läßt sich diesem Umstand dadurch Rechnung tragen, daß unter Beibehaltung des elektrischen Antriebes 1 lediglich ein modifiziertes Kronrad oder Kronradsegment 5 am Anlenkpunkt 6 an der Außenseite des Gehäuses 3 vorgesehen wird. Bei den als elektrische Antrieben 1 eingesetzten elektrischen Maschinen handelt es sich bevorzugt um reversierbar betreibbare Gleichstrommotoren. Die eingesetzten reversierbaren Gleichstrommotoren benötigen keine Sensoren für die Kommutierung; es ist lediglich ein Winkelsensor für die Detektion der Positionen des Abtriebes am Kronrad oder Kronradsegment 5 erforderlich. Die Abtriebswelle des Kronrades oder des Kronradsegmentes 5 fällt mit dem Anlenkpunkt 6 bzw. mit dessen Drehachse 16 an der Außenseite des Gehäuses 3 des elektrischen Antriebes 1 zusammen. Als Winkelsensoren zur Detektion der Drehlage der Abtriebswelle des Kronrades oder des Kronradsegmentes 5 können Hall-Sensoren oder kapazitive Sensoren eingesetzt werden.

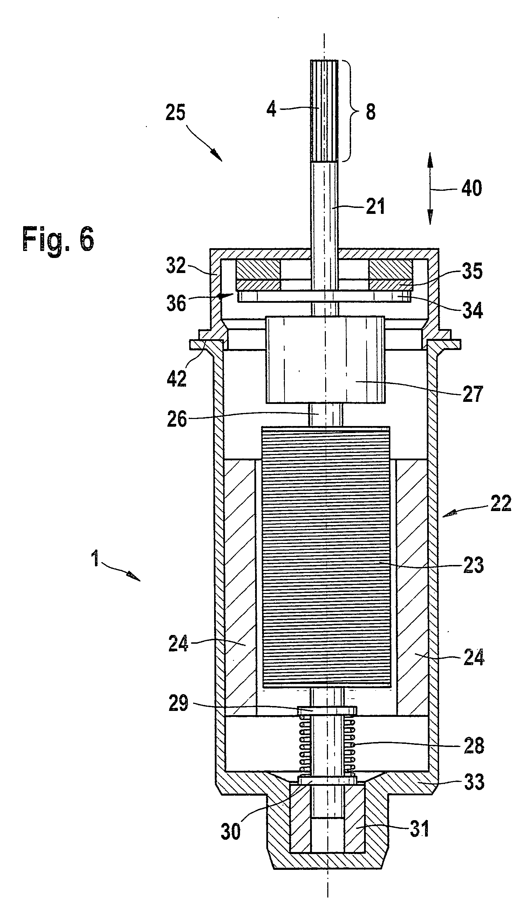

Fig. 6 zeigt eine Antriebseinheit für Wischkomponenten mit einer aktivierten Selbsthemmungseinrichtung.

Aus der Darstellung gemäß Fig. 6 geht hervor, daß der dort dargestellte elektrische Antrieb 1 ein geteiltes Gehäuse 32, 33 umfasst. Die Gehäusehälften 32 bzw. 33 liegen entlang einer mit Bezugszeichen 42 gekennzeichneten Stoßfuge aneinander und können miteinander verschraubt oder über Klammerverschlüsse miteinander verbunden werden. An der Innenseite der zweiten Gehäusehälfte 33 eines Poltopfgehäuses 22 des elektrischen Antriebes 1 sind statorseitige Permanentmagnete 24 aufgenommen. Die Permanentmagnete 24 an der Innenseite der zweiten Gehäusehälfte 33 umschließen eine Ankerwicklung 23, die drehfest auf der Ankerwelle 26 des elektrischen Antriebes 1 aufgenommen ist. In einem Abstand zur vorderen Stirnseite der Ankerwicklung 23 ist auf dieser ein Kommutator 27 aufgenommen. Die Ankerwelle 26 des elektrischen Antriebes 1 ist einerseits in der ersten Gehäusehälfte 32 des geteilt ausgebildeten Poltopfgehäuses 22 gelagert und andererseits in einem Wellenlager 31, welches innerhalb der zweiten Gehäusehälfte 33 des geteilt ausgebildeten Poltopfgehäuses 22 aufgenommen ist. Die Ankerwelle 26 des elektrischen Antriebes ist so ausgebildet, daß sie innerhalb des in der zweiten Gehäusehälfte 33 aufgenommenen Axiallagers 31 verschiebbar ist. An dem innerhalb der zweiten Gehäusehälfte 33 aufgenommenen Ende der Ankerwelle 26 ist an dieser ein Federelement 28 aufgenommen. Das Federelement 28 stützt sich einerseits auf einem in axialer Richtung fixierten ersten Ring 29 ab und andererseits auf einem zweiten Ring 30, der in axialer Richtung verschiebbar auf der Ankerwelle 26 des elektrischen Antriebes 1 aufgenommen ist.

Vor dem Kommutator 27 liegend, ist an der Ankerwelle 26 des elektrischen Antriebes 1 eine Anlaufscheibe 34 aufgenommen. Diese ist fest mit der Ankerwelle 26 verbunden und wirkt mit einer von der zweiten Gehäusehälfte 32 umschlossenen Anlagefläche 35 zusammen.

An dem Ende der Ankerwelle 26, welches vom Axiallager 31 innerhalb der zweiten Gehäusehälfte 33 des geteilten Poltopfgehäuses 22 umschlossen ist, kann zur Reibungsverminderung und zur Aufnahme der bei der Axialverschiebung der Ankerwelle 26 auftretenden Kräfte ein Axiallager vorgesehen sein. Das Axiallager kann an der dem zweiten Ring 30 zuweisenden Stirnseite des hülsenförmig ausgebildeten Axiallagers 31 aufgenommen sein.

Im in Fig. 6 dargestellten und bestromten Zustand 25 des elektrischen Antriebes 1 der Antriebseinheit, von der in den Fig. 1 bis 5 nur das Gehäuse und die erste Verzahnung 4 dargestellt ist, ist die Ankerwicklung 23 der Ankerwelle 26 nicht bestromt. In diesem Zustand wirkt nur eine Kraft, mit welcher das ferromagnetische Blechpaket die Ankerwicklung 23 von den Permanentmagneten 24, die die Ankerwicklung 23 umgeben, in Position gehalten wird. Die Federkraft des Federelementes 28 ist so dimensioniert, daß sie diese durch die ferromagnetischen Blechpakete im unbestromten Zustand wirkende Kraft überwindet. Aus diesem Grunde wird die Ankerwelle 26 durch die Wirkung des Federelementes 28 mit ihrer Anlaufscheibe 34 in die erste Gehäusehälfte 32 des geteilt ausgebildeten Poltopfgehäuses 22 hineingedrückt. Demzufolge stellt sich ein Reibschluß 36 zwischen der Anlaufscheibe 35 und der Lagefläche 35 ein. Während der durch den Doppelpfeil 40 angedeuteten Axialbewegung bleibt das - in Fig. 6 jedoch nicht dargestellte - Kronrad oder Kronradsegment 5 im Eingriff mit der ersten Verzahnung 4 der Ankerwelle 26, die sich über einen Verzahnungsbereich 8 erstreckt, welcher an einer Ritzelwelle 21 ausgebildet ist. Ein Ausspuren der bevorzugt als Ritzel ausgebildeten ersten Verzahnung 4 aus dem Zahneingriff mit der der ersten Verzahnung 4 zuweisenden Verzahnung 9 an der Innenseite des Kronrades oder des Kronradsegmentes 5 unterbleibt.

Durch die Axialbewegung entsprechend des Weges 40 wird die auf der Ankerwelle 26 verdrehsicher befestigte Anlaufscheibe 34 auf die Anlagefläche 35 gedrückt. Aufgrund des sich einstellenden Reibschlußes 36 wird eine Drehbewegung der Ankerwelle 26 innerhalb des geteilten Poltopfgehäuses 22 verhindert.

Anstelle eines in Fig. 6 dargestellten reibschlüssigen Kontaktes zwischen der Anlaufscheibe 34 und der gehäuseseitig angeordneten Anlagefläche 35 kann auch eine formschlüssige Verbindung zwischen der Anlaufscheibe 34 und der Anlagefläche 35 ausgebildet werden. Dies kann über eine Verzahnung erreicht werden. Eine Verzahnungsverbindung, d.h. eine formschlüssige Verbindung zwischen der Anlaufscheibe 34 und der Anlagefläche 35 im Inneren des Poltopfgehäuses 22, vermindert in vorteilhafter Weise die Höhe der zu erzeugenden Axialkräfte. Durch die Wahl des Zahnflankenwinkels kann das Verhältnis von axialer Zustellkraft zu blockierbarem Drehmoment eingestellt werden. Da mit zunehmenden Zahnflankenwinkel das Lösen der Verbindung und der Drehmomentlast schwieriger ist, muß bei der Auslösung auf ein sicheres Lösen beim Loslauf geachtet werden. Ist bei der Ausführung einer kraftflüssigen Verbindung zwischen der Anlaufscheibe 34 und der Anlagefläche 35 im Inneren des Poltopfgehäuses 22 aufgrund der Zahngeometrie kein Einspuren der Zahnräder beim Abschalten des Stromes möglich, kann dies durch geringe Zahnabstände mit einem kleinen Winkelversatz, verursacht durch die äußeren Kräfte oder durch die axialen Kräfte, ermöglicht werden. Günstig sind eine große Zähnezahl und eine kleine Zahngeometrie.

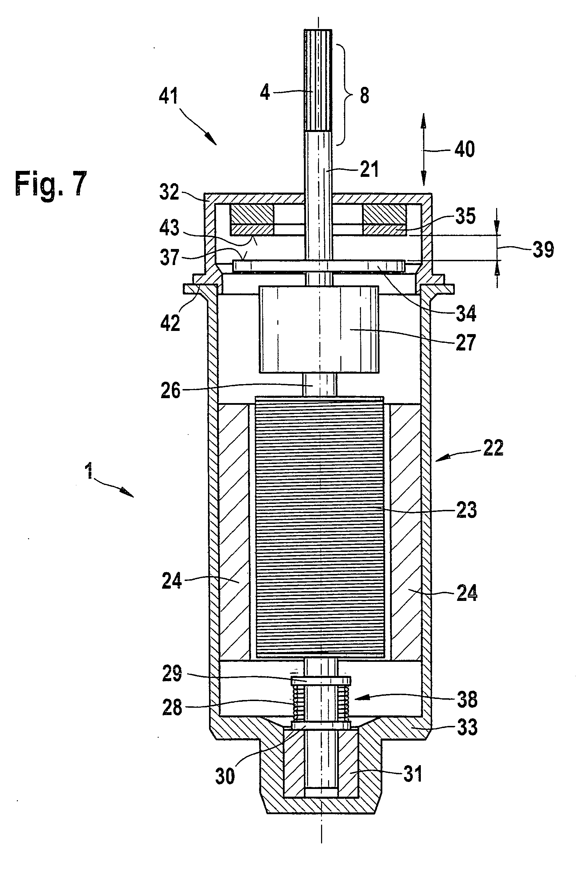

Fig. 7 zeigt einen nicht aktivierte Selbsthemmungseinrichtung eines elektrischen Antriebes der erfindungsgemäß vorgeschlagenen Antriebseinheit.

Aus der Darstellung gemäß Fig. 7 geht hervor, daß im bestromten Zustand 41 der Ankerwicklung 23 der Ankerwelle 26 aufgrund des sich ausbildenden Magnetfeldes der Ankerwicklung 23 eine axiale Kraft erzeugt wird, die die Kraft des gespannten Federelementes 28 überwindet. Dadurch wird die Ankerwicklung 23 zwischen die Permanentmagnete 24, die die Ankerwicklung 23 an der Innenseite der zweiten Gehäusehälfte 33 umgeben, erreicht. Diese Positionen der Ankerwelle 26 der Ankerwicklung 23 des elektrischen Antriebes 1 bleibt auch dann aufrechterhalten, wenn bei jedem Reversieren, d.h. bei jeder Drehrichtungsumkehr des elektrischen Antriebs 1, das elektromagnetische Feld nicht zusammenbricht. Im bestromten Zustand 41 ist die an der Ankerwelle 23 drehfest aufgenommene Anlaufscheibe 34 um ein Spaltmaß 39 von der Anlagefläche 35 zurückgestellt. Das Spaltmaß 39 stellt sich zwischen der der Anlagefläche 35 zuweisenden Seite 37 (Scheibenfläche) der Anlauffläche 34 und einer Ringfläche 43 der Anlagefläche 35 ein. Im in Fig. 7 dargestellten, bestromten Zustand der Ankerwicklung 23 des elektrischen Antriebes hat das Federelement 28 einen komprimierten Zustand 38 angenommen, so daß das der ersten Verzahnung 4 gegenüberliegende Ende der Ankerwelle 26 vollständig in das hülsenförmig ausgebildete Axiallager 31 in der zweiten Gehäusehälfte 33 zurückgestellt ist. Dieses hülsenförmig ausgebildete Axiallager 31 wird so bemessen, daß dieses problemlos die bei Axialverschiebung der Ankerwelle 26 gemäß des Weges 40 entstehende Einfahrbewegung aufnimmt. Im komprimierten Zustand 38 des Federelementes 28 kann dieses bis auf Blocklänge zusammengedrückt sein und liegt mit seinen jeweiligen Enden an der am ersten Ring 29 und am zweiten Ring 30, der verschieblich auf der Ankerwelle 26 aufgenommen ist, an. Wie bereits im Zusammenhang mit Fig. 6 erwähnt, kann unterhalb des zweiten Ringes 30 an der dem hülsenförmigen Axiallager 31 zuweisenden Seite ein die Reibung verminderndes Axiallager aufgenommen sein.

Der Einsatz eines eine Selbsthemmungsvorrichtung aufweisenden elektrischen Antriebes 1 mit einem Kronrad oder Kronradsegment 5 gemäß der Fig. 1 bis 5 des vorliegenden Anmeldungsgegenstandes erlaubt eine Vermeidung einer ungewollten Bewegung einer Wischarmkomponente aufgrund auf dieser wirkende Wind- und Trägheitskräfte. Der elektrische Antrieb 1, an welchem das Kronrad oder das Kronradsegment 5 unmittelbar aufgenommen ist, erlaubt eine Verschiebung der Ankerwelle 26 und gegebenenfalls des Kommutators 27 bei Stromabschaltung. Im stromlosen Zustand 25 wird eine kraft- oder formschlüssige Verbindung 36 der Ankerwelle 26 mit dem Poltopfgehäuse 22 durch eine mit einer Anlagefläche 35 zusammenwirkenden Anlaufscheibe 34 erreicht. Die Blockierung der Drehbewegung der Ankerwelle 26 im unbestromten Zustand 25 des elektrischen Antriebes 1 kann entweder formschlüssig oder kraftschlüssig erfolgen. Bei erneuter Bestromung, d.h. bei bestromtem Zustand 41 des elektrischen Antriebes 1, wird die Ankerwelle 26 durch die von der Ankerwicklung 23 ausgeübten Magnetkräfte wieder in ihre Arbeitsposition zwischen die an der Innenseite des Poltopfgehäuses 22 angeordneten Permanentmagnete 24 bewegt, wodurch die kraft- oder formschlüssige Verbindung 36 zwischen der Anlaufscheibe 34 und der Anlagefläche 35 innerhalb des Poltopfgehäuses 22 wieder aufgehoben wird. Aufgrund des Einsatz eines Kronrades oder eines Kronradsegmentes 5 kann die axiale Verschiebung der Ankerwelle 26 gemäß des Weges 40 ohne Zahneingriffsstörungen oder zusätzlicher Krafteinwirkung erfolgen, so daß Kupplungselemente oder eine Synchronisationsvorrichtung entbehrlich sind. Werden die Innenverzahnung 9 des Kronrades oder des Kronradsegmentes 5 und die erste Verzahnung 4, beispielsweise ein Ritzel, geradverzahnt ausgeführt, kann ein Ausspuren der als Ritzel ausgebildeten ersten Verzahnung 4 im Verzahnungsbereich 8 der Ankerwelle 26 aus der Verzahnung 9 des Kronrades oder Kronradsegmentes 5 verhindert werden.

Die erfindungsgemäß vorgeschlagene Antriebseinheit, einen elektrischen Antrieb 1 mit verschiebbarer Ankerwelle 26 umfassend, sowie ein am Gehäuse des elektrischen Antriebes 1 verschwenkbar gelagertes Kronrad oder Kronradsegment 5 ermöglicht den Einsatz eines Getriebes mit hohem Wirkungsgrad. Damit ist einerseits eine Verringerung der Antriebsleistung sowie eine Verringerung des Bauvolumens der Antriebseinheit möglich, andererseits kann auf ein Gelenkgetriebe verzichtet werden. Die Selbsthemmung im unbestromten Zustand 25 des elektrischen Antriebes 1 erfolgt aufgrund der Axialverschiebung der Ankerwelle 26, wobei jedoch der Zahneingriff innerhalb des Getriebes 4, 5 stets aufrechterhalten wird.

### Bezugszeichenliste

- 1: elektrischer Antrieb
- 2: Symmetrieachse
- 3: Gehäuse (einteilig)
- 4: erste Verzahnung (Ritzel)
- 5: Kronrad-/Kronradsegment
- 6: Anlenkpunkt Kronrad-/Kronradsegment
- 7: Schwenkbereich
- 8: Verzahnungsbereich erste Verzahnung (4)
- 9: Verzahnung Kronrad-/Kronradsegment
- 10: Mittellage Kronrad-/Kronradsegment
- 11: erster Schwenkbereich (+55 °)
- 12: zweiter Schwenkbereich (-55°)
- 14: Verzahnungslänge (innen)
- 15: Auslaufbereich Kronradsegment
- 16: Drehachse Kronrad-/Kronradsegment
- 17: Bohrung
- 18: Innenraum
- 19: Radius Kronrad-/Kronradsegment
- 19.1: Radiusmitte Kronrad-/Kronradsegment
- 19.2: Radiusaußenseite Kronrad-/Kronradsegment
- 20: Achswinkel
- 21: Ritzelwelle
- 22: geteiltes Poltopfgehäuse
- 23: Ankerwicklung
- 24: Statormagnete
- 25: unbestromter Zustand
- 26: Ankerwelle
- 27: Kommutator
- 28: Federelement
- 29: erster Ring
- 30: zweiter Ring
- 31: hülsenförmiges Axiallager
- 32: erste Gehäusehälfte
- 33: zweite Gehäusehälfte
- 34: Anlaufscheibe
- 35: Anlagefläche
- 36: reibschlüssige Verbindung
- 37: Scheibenfläche
- 38: komprimierter Zustand Federelement (28)
- 39: Spalt
- 40: Axialverschiebungsweg
- 41: bestromter Zustand
- 42: Stoßfuge Gehäusehälften
- 43: Ringfläche
- 45: erste Endlage Kronrad-/Kronradsegment
- 46: zweite Endlage Kronrad-/Kronradsegment

## Patentansprüche

1. Antriebseinheit für Wischkomponenten an Fahrzeugen mit einem elektrischen Antrieb (1), welcher in einem Gehäuse (3; 32, 33) aufgenommen ist und eine Ankerwelle (26) mit Ankerwicklung (23) umfaßt, an welcher eine erste Verzahnung (4) ausgebildet ist und die Ankerwelle (26) im Gehäuse (3; 32, 33) in axiale Richtung (40) verschiebbar aufgenommen und über ein Federelement (28) vorgespannt ist, **dadurch gekennzeichnet, daß** am Gehäuse (3; 32, 33) des elektrischen Antriebes (1) ein Kronrad- oder Kronradsegment (5), welches mit der ersten Verzahnung (4) auf der Ankerwelle (26) kämmt, um eine Drehachse (16) verschwenkbar ist.

2. Antriebseinheit gemäß Anspruch 1, **dadurch gekennzeichnet, daß** die Drehachse (16) des Kronrades- oder des Kronradsegmentes (5) am Gehäuse (3; 32, 33) die Abtriebsachse der Antriebseinheit bildet.

3. Antriebseinheit gemäß Anspruch 1, **dadurch gekennzeichnet, daß** die erste Verzahnung (4) an der Ankerwelle (26) in einer Verzahnungslänge (8) ausgebildet ist, die dem Weg (40) entspricht, innerhalb dessen die Ankerwelle (26) innerhalb des Gehäuses (3; 32, 33) axial verschiebbar ist.

4. Antriebseinheit gemäß Anspruch 1, **dadurch gekennzeichnet, daß** die erste Verzahnung (4) an der Ankerwelle (26) als Ritzel ausgeführt ist.

5. Antriebseinheit gemäß Anspruch 1, **dadurch gekennzeichnet, daß** das Kronrad oder Kronradsegment (5) eine der ersten Verzahnung (4) der Ankerwelle (26) gegenüberliegende Verzahnung (9) aufweist.

6. Antriebseinheit gemäß Anspruch 5, **dadurch gekennzeichnet, daß** die erste Verzahnung (4) der Ankerwelle (26) und die Verzahnung (9) des Kronrades oder des Kronradsegmentes (5) als Geradverzahnungen ausgeführt sind.

7. Antriebseinheit gemäß Anspruch 1, **dadurch gekennzeichnet, daß** die Drehachse (16) des Kronrades oder des Kronradsegmentes (5) und die Ankerwelle (26) des elektrischen Antriebes (1) gewinkelt zueinander verlaufen.

8. Antriebseinheit gemäß Anspruch 7, **dadurch gekennzeichnet, daß** die Drehachse (16) des Kronrades oder des Kronradsegmentes (5) und die Ankerwelle (26) des elektrischen Antriebes (1) im rechten Winkel (20) zueinander angeordnet sind.

9. Antriebseinheit gemäß Anspruch 7, **dadurch gekennzeichnet, daß** die Drehachse (16) des Kronrades oder des Kronradsegmentes (5) und die Ankerwelle (26) des elektrischen Antriebes (1) in einem Winkel von maximal 45 °, besonders bevorzugt zwischen 15 ° und 20 ° zueinander angeordnet sind.

10. Antriebseinheit gemäß Anspruch 1, **dadurch gekennzeichnet, daß** das Kronrad oder das Kronradsegment (5) oval ausgeführt ist, wobei dessen Außenradius (19.2) den in der Symmetrielinie des Kronrades oder des Kronradsegmentes (5) liegenden Radius (19.1) übersteigt.

11. Antriebseinheit gemäß Anspruch 1, **dadurch gekennzeichnet, daß** das Kronrad oder das Kronradsegment (5) bezogen auf seine Mittellage (10) in beide Richtungen um identische Schwenkbereiche (11, 12) verschwenkbar ist.

12. Antriebseinheit gemäß Anspruch 11, **dadurch gekennzeichnet, daß** sich in den Endlagen (45, 46) des Kronrades oder des Kronradsegmentes (5) die Schwenkbereiche (11, 12) bezogen auf die Symmetrieachse (2) des elektrischen Antriebes (1) jeweils addieren.

13. Antriebseinheit gemäß Anspruch 1, **dadurch gekennzeichnet, daß** im Gehäuse (3; 32, 33) des elektrischen Antriebes (1) eine Anlagefläche (35) ausgebildet ist, die mit einer auf der Ankerwelle (26) drehfest angeordneten Anlaufscheibe (34) bei der Axialverschiebung der Ankerwelle (26) um den Weg (40) zusammenwirkt.

14. Antriebseinheit gemäß Anspruch 13, **dadurch gekennzeichnet, daß** bei einer Axialverschiebung der Ankerwelle (26) und dem Weg (40) der Zahneingriff zwischen der ersten Verzahnung (4) an der Ankerwelle (26) und der Verzahnung (9) des Kronrades oder des Kronradsegmentes (5) aufrechterhalten bleibt.

15. Antriebseinheit gemäß Anspruch 13, **dadurch gekennzeichnet, daß** im unbestromten Zustand (25) des elektrischen Antriebes (1) die Anlaufscheibe (34) der Ankerwelle (26) durch das Federelement (28) im Reibschluß (36) oder im Formschluß an die Anlagefläche (35) des Gehäuses (3; 32, 33) angestellt ist.

16. Antriebseinheit gemäß Anspruch 13, **dadurch gekennzeichnet, daß** im bestromten Zustand (41) des elektrischen Antriebes (1) die Ankerwicklung (23) der Ankerwelle (26) entgegen der Wirkung des Federelementes (28) in die Statorwicklung (24) des elektrischen Antriebes (1) gestellt ist und die Anlaufscheibe (34) von der Anlagefläche (35) des Gehäuses (3; 32, 33) getrennt ist.

17. Antriebseinheit gemäß Anspruch 16, **dadurch gekennzeichnet, daß** bei der Drehrichtungsumkehr des elektrischen Antriebes (1) zwischen den Endlagen (45, 46) und des Kronrades oder des Kronradsegmentes (5) die Anlaufscheibe (34) von der Anlagefläche (35) des Gehäuses (3; 32, 33) getrennt bleibt.
